# FASCICULE DE BREVET EUROPEEN

(11) **EP 4 077 125 B1**
(45) Date de publication et mention de la délivrance du brevet: **24.09.2025**
(21) Numéro de dépôt: 20820185.5
(22) Date de dépôt: 10.12.2020
(51) Int. Cl.: B64C 1/06, B64D 7/00, B64U 30/12, B64U 101/15, B64U 10/25

(54) **ENSEMBLE MODULAIRE D'AÉRONEFS AUTONOMES POUR FORMER UN GROUPE AÉRIEN MULTI-MISSION ET AÉRONEFS CORRESPONDANTS**
MODULARE ANORDNUNG VON AUTONOMEN FLUGZEUGEN ZUR BILDUNG EINER MEHRMISSIONSFLUGEINHEIT UND ENTSPRECHENDES FLUGZEUG
MODULAR ASSEMBLY OF AUTONOMOUS AIRCRAFT FOR FORMING A MULTI-MISSION AVIATION UNIT AND CORRESPONDING AIRCRAFT

(30) Priorité: 18.12.2019 FR 1914724
(43) Date de publication de la demande: 26.10.2022
(73) Titulaire: Safran Electronics & Defense, 75015 Paris (FR)
(72) Inventeur: GOBBATTI, Hervé, 77550 MOISSY-CRAMAYEL (FR)
(74) Mandataire: Cabinet Boettcher
(86) Numéro de dépôt international: PCT/EP2020/085459
(87) Numéro de publication internationale: WO 2021/122277

(56) Documents cités:
- WO-A1-86/01175
- DE-A1- 4 218 197
- DE-C2- 4 218 197
- FR-A- 1 059 020
- RU-U1- 193 778
- US-A- 6 056 237
- US-B2- 10 259 560

## Description

### ARRIERE PLAN DE L'INVENTION

La présente invention concerne le domaine militaire et plus particulièrement le domaine de l'aéronautique militaire. Il est connu que les capacités militaires de défense anti-aérienne des états se sont fortement développées ses dernières années. Ces capacités militaires de défense comprennent des moyens de surveillance de l'espace aérien et des moyens de destruction d'aéronefs comme les avions et les missiles. Les moyens de surveillance comprennent essentiellement des radars. Les moyens de destruction comprennent des canons à haute cadence de tir, des missiles sol/air et des avions équipés de missiles air/air, ces différents moyens étant sélectionnés en fonction de la cible, de l'urgence et du mode d'intervention considéré comme le plus pertinent.

Afin d'une part de préserver la vie des pilotes et les avions pilotés qui sont les plus coûteux, et d'autre part de réussir les missions dans un environnement de défense anti-aérienne dense, les futurs projets militaires de d'avions de combat de prochaine génération en Europe (SCAF, TEMPEST) et aux USA (drones produits par la société KRATOS, programme « LOYAL WINGMAN » de la société BOEING) prévoient d'associer des avions pilotés et des aéronefs porteurs autonomes agissant en collaboration avec lesdits avions pilotés.

Il est ainsi envisagé de pouvoir disposer de plusieurs types d'aéronefs porteurs autonomes selon le type de mission à réaliser. Les aéronefs porteurs autonomes comprendraient ainsi des aéronefs porteurs autonomes emportant des capteurs ou des brouilleurs pour servir par exemple de moyens de reconnaissance ou de guerre électronique ou de leurrage et des aéronefs porteurs autonomes emportant différents types de charges militaires pour former des armements projetables tels que des missiles ou des bombardiers.

Cependant, cette possibilité de disposer de plusieurs types d'aéronefs porteurs autonomes est relativement coûteuse alors que, dans la plupart des pays, toute augmentation des budgets militaires est le résultat d'âpres négociations.

Il est connu, notamment des documents US-A-6056237, RU-U-193778, DE-A-4218197, WO-A-86/01175, US-B-10259560 et FR-A-1059020 des aéronefs intégrant des modules.

L'aéronef selon US-A-6056237 comprend un module de propulsion, un module de sustentation avec une voilure, un module de détection et un module d'armement.

### OBJET DE L'INVENTION

L'invention a notamment pour but d'améliorer les capacités d'intervention d'une flotte aérienne.

### RESUME DE L'INVENTION

A cet effet, on prévoit, selon l'invention un ensemble modulaire d'aéronefs autonomes, comprenant des modules communs et des modules spécifiques fixables les uns aux autres, les modules comportant chacun une enveloppe formant un tronçon de fuselage,
. les modules communs comprenant :
   - des modules de propulsion pourvus d'une motorisation,
   - des modules de guidage pourvus d'au moins une surface mobile de vol et d'un actionneur de déplacement de ladite surface mobile de vol,
   - des modules de commande incorporant une unité électronique de commande pourvue des moyens de son raccordement à la motorisation et à l'actionneur,
   - des modules de sustentation pourvus d'une voilure pour assurer la sustentation de l'aéronef autonome,
. les modules spécifiques comprenant :
   - des modules de détection comprenant au moins un capteur d'un environnement de l'aéronef,
   - des modules d'armement.

Ainsi, il est possible de constituer un groupe aérien comportant des aéronefs porteurs autonomes ayant différentes fonctions à partir des modules. Il en résulte une baisse des coûts de fabrication mais également de maintenance puisqu'un module défaillant peut facilement et rapidement être remplacé.

D'autres caractéristiques et avantages de l'invention ressortiront à la lecture de la description qui suit d'un mode de réalisation particulier et non limitatif de l'invention.

### BREVE DESCRIPTION DES DESSINS

Il sera fait référence aux dessins annexés, parmi lesquels :

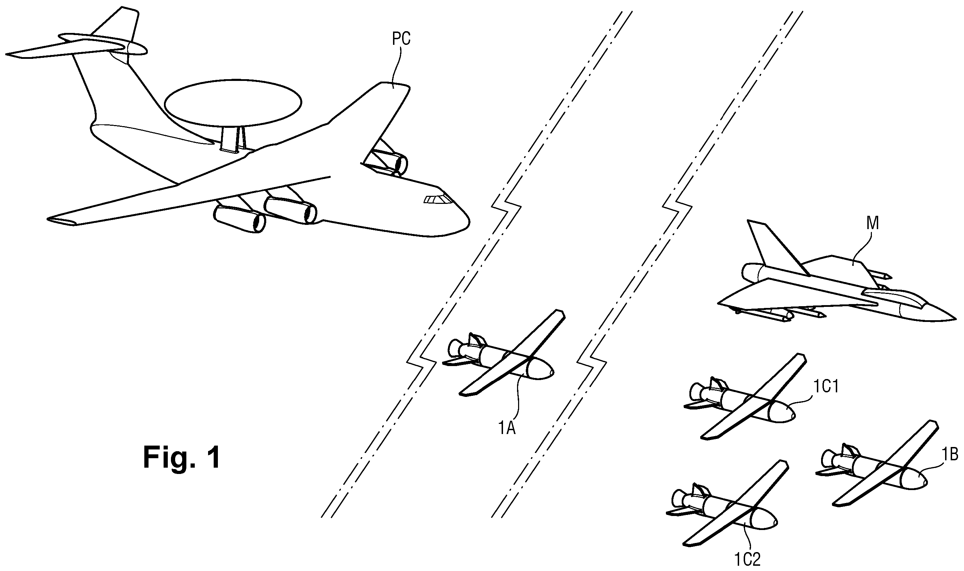

La figure 1 illustre schématiquement en perspective un groupe de combat aérien conforme à l'invention ;
La figure 2 est une vue schématique partielle d'un ensemble conforme à l'invention pour la fabrication d'aéronefs porteurs autonomes de ce groupe de combat ;
La figure 3 est une vue schématique en perspective d'un des modules de sustentation ;
La figure 4 est une vue schématique en perspective d'un des modules de motorisation ;
La figure 5 est une vue schématique en perspective d'un autre des modules de motorisation ;
La figure 6 est une vue schématique en perspective, agrandie, d'un module de commande.

### DESCRIPTION DETAILLEE DE L'INVENTION

En référence aux figures, l'invention est ici décrite en application à un aéronef porteur autonome, généralement désigné en 1, destiné à évoluer en association avec au moins un aéronef piloté M « maître » comme un chasseur.

L'aéronef piloté M est dit maître en ce sens que l'aéronef porteur autonome 1 est commandé par l'aéronef piloté M ou échange des données directement avec l'aéronef piloté M qui exploite lesdites données. Dans l'exemple ici décrit, l'aéronef piloté M fait partie d'un groupe aérien comprenant un aéronef piloté de commandement PC et des aéronefs porteurs autonomes 1 selon différentes versions distinguées les unes des autres par les lettres A, B, C à savoir :
- un aéronef porteur autonome 1A de surveillance de zone et de relais de transmission ;
- un aéronef porteur autonome 1B de reconnaissance ;
- un aéronef porteur autonome 1C1 armé ;
- un aéronef porteur autonome 1C2 armé.

Les aéronefs porteurs autonomes 1A, 1B, 1C1, 1C2 sont formés par assemblage de tronçons de fuselage formant des modules communs et des modules spécifiques appartenant à un ensemble de modules comprenant un ou plusieurs exemplaires de chaque module.

Les modules comportent chacun une enveloppe 2 formant un tronçon de fuselage. L'enveloppe 2 a ici une section transversale sensiblement circulaire. L'enveloppe 2 de chaque module renferme ou porte le ou les équipements conférant au module sa ou ses fonctions (communes ou spécifiques) faisant de lui un module commun ou un module spécifique.

Les modules communs comprennent :
- un premier module de propulsion 11,
- un deuxième module de propulsion 12,
- un troisième module de propulsion 13,
- un quatrième module de propulsion 14,
- un premier module de réserve de carburant 15,
- un deuxième module de réserve de carburant 16,
- un module de commande 21,
- un module de nez 25,
- un premier module de sustentation 31,
- un deuxième module de sustentation 32.

Chacun des modules de propulsion 11, 12 forme ici un tronçon de queue de l'aéronef porteur autonome 1 et comprend, d'une part, un moteur et, d'autre part, une unité de guidage de sorte que les modules de propulsion 11, 12 forment également des modules de guidage.

Le premier module de propulsion 11 comprend ici au moins un moteur 111, de type moteur fusée, monté à l'extrémité de l'enveloppe 2 qui renferme également un réservoir de carburant liquide, un réservoir de comburant permettant d'alimenter le moteur 121 et une unité électronique de commande moteur 112 assurant la commande du moteur 111 en fonction de signaux de commande provenant du module de commande 21 et de signaux de mesure et/ou d'état provenant de capteurs de paramètres de fonctionnement du moteur 111. Le deuxième module de propulsion 12 comprend ici au moins un moteur 121, à savoir un turboréacteur simple ou double flux, monté à l'extrémité de l'enveloppe 2 qui renferme une unité électronique de commande moteur 122 assurant la commande du moteur 1é1 en fonction de signaux de commande provenant du module de commande 21 et de signaux de mesure et/ou d'état provenant de capteurs de paramètres de fonctionnement du moteur 121.

L'unité de guidage est pourvue d'au moins une surface mobile de vol et d'un actionneur de déplacement de ladite surface mobile de vol. Plus précisément, l'enveloppe 2 est pourvue d'un empennage comprenant deux ailerons 201 et une gouverne de direction 202 qui sont montés en saillie externe de l'enveloppe 2 et qui sont reliés à un ensemble d'actionnement 203 connu en lui-même et comportant ici des actionneurs électromécaniques entrainant en rotation les ailerons 201 et la dérive 202 en fonction de signaux de commande provenant du module de commande 21 et de signaux de mesure et/ou d'état provenant notamment de capteurs de position des ailerons 201 et de la gouverne de direction 202.

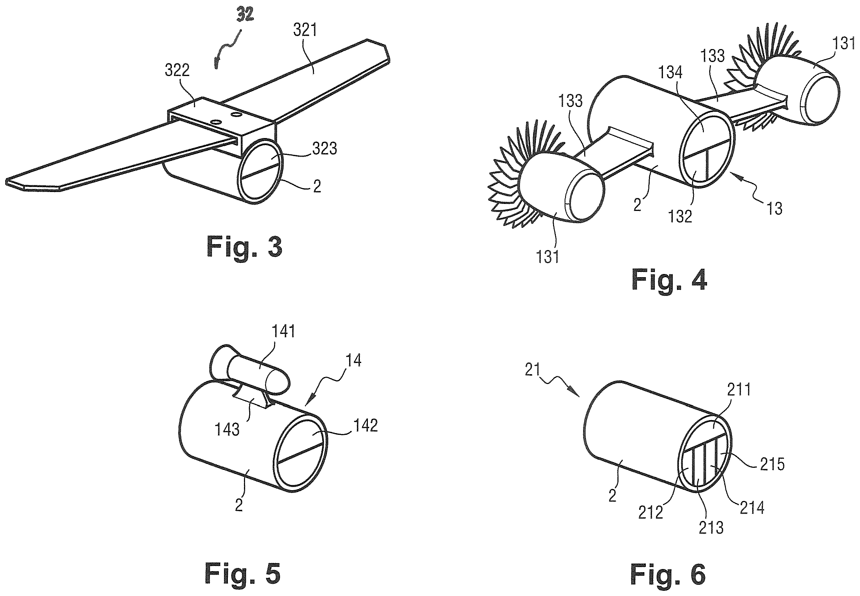

Le module de guidage et le module de propulsion peuvent faire partie d'un unique module comme décrit ci-avant mais peuvent aussi constituer deux modules séparés. Ainsi, on peut avoir un tronçon de queue pourvu d'un empennage comme précédemment et un tronçon intermédiaire pourvu de moyens de propulsion comme sur les figures 4 et 5.

A la figure 4 est représenté un troisième module de propulsion 13 comprenant ici deux moteurs 131 de type « openrotor » monté chacun à l'extrémité d'un support 133 s'étendant en saillie de l'enveloppe 2. L'enveloppe 2 du premier module de propulsion 11 renferme également un réservoir 134 de carburant permettant d'alimenter le moteur 131 et une unité électronique de commande moteur 132 assurant la commande du moteur 131 en fonction de signaux de commande provenant du module de commande 21 et de signaux de mesure et/ou d'état provenant de capteurs de paramètres de fonctionnement du moteur 131.

A la figure 5 est représenté un quatrième module de propulsion 14 comprenant ici au moins un moteur 141, de type fusée à carburant solide, monté à l'extrémité d'un support 143 s'étendant en saillie de l'enveloppe 2. L'enveloppe 2 du quatrième module de propulsion 14 renferme une unité électronique de commande moteur 142 assurant la commande du moteur 141 en fonction de signaux de commande provenant du module de commande 21 et de signaux de mesure et/ou d'état provenant de capteurs de paramètres de fonctionnement du moteur 141.

Les modules de réserve de carburant 15, 16 ont des contenances différentes selon l'autonomie nécessaire à l'accomplissement de la mission dévolue à l'aéronef porteur autonome.

Le module de commande 21, représenté à la figure 6, comprend une unité électronique de commande 211, un ensemble de capteurs de paramètres de vol et de navigation 212 (centrale inertielle, capteur de vitesse air, récepteur de signaux satellitaires de positionnement, capteur barométrique, capteur de température air notamment) et un ensemble d'interconnexion 213 de l'unité électronique de commande 211 avec l'ensemble d'actionnement 203 et l'unité électronique de commande moteur 112, 122, 132, 142. L'unité électronique de commande 211 est agencée pour piloter l'aéronef porteur autonome 1 et lui faire exécuter des tâches en commandant des équipements des différents modules composant l'aéronef porteur autonome 1.

Le module de commande 21 comprend en outre une première unité électronique de télécommunication 214 reliée à l'unité électronique de commande 211 pour permettre un échange de signaux électromagnétiques entre l'unité électronique de commande 211 et l'aéronef piloté M. La première unité électronique de transmission 213 comprend un émetteur/récepteur et un dispositif cryptographique pour chiffrer les signaux à envoyer et déchiffrer les signaux reçus. La première unité électronique de télécommunication 214 est agencée pour assurer une transmission à relativement faible portée, mais à faible détectabilité, avec l'aéronef piloté M qui constitue un premier type d'aéronef.

Le module de commande 21 comprend en outre une deuxième unité électronique de télécommunication 214 reliée à la première unité électronique de télécommunication 213 directement ou via l'unité électronique de commande 211, pour permettre un échange de signaux électromagnétiques entre la première unité électronique de télécommunication 213 et un aéronef piloté de commandement PC destiné à voler en arrière et à distance du reste du groupe aérien. La deuxième unité électronique de télécommunication 214 est agencée pour assurer une transmission à relativement grande portée, mais à plus forte détectabilité, avec l'aéronef de commandement qui est un deuxième type d'aéronef. On comprend que la deuxième unité électronique de télécommunication 214 constitue un relais amplificateur des signaux que le pilote de l'aéronef piloté M souhaite transmettre à l'aéronef de commandement PC en limitant le risque que l'émission des signaux par l'aéronef piloté M puisse être détectée par un dispositif ennemi et ne révèle précisément la position de l'aéronef piloté M. Au pire, c'est la position de l'aéronef porteur autonome 1 émettant les signaux amplifiés qui sera détectée.

Le module de nez 25 n'a ici qu'une fonction aérodynamique mais peut incorporer des capteurs comme des capteurs de vitesse air de type Pitot ou autres, ou un équipement conférant au module de nez 25 une fonction particulière. Le module de nez 25 comprend ainsi par exemple un illuminateur laser, une antenne d'un radar frontal, un auto-directeur (visible, infrarouge, à imagerie, à détection de points chauds ou de tâches laser...).

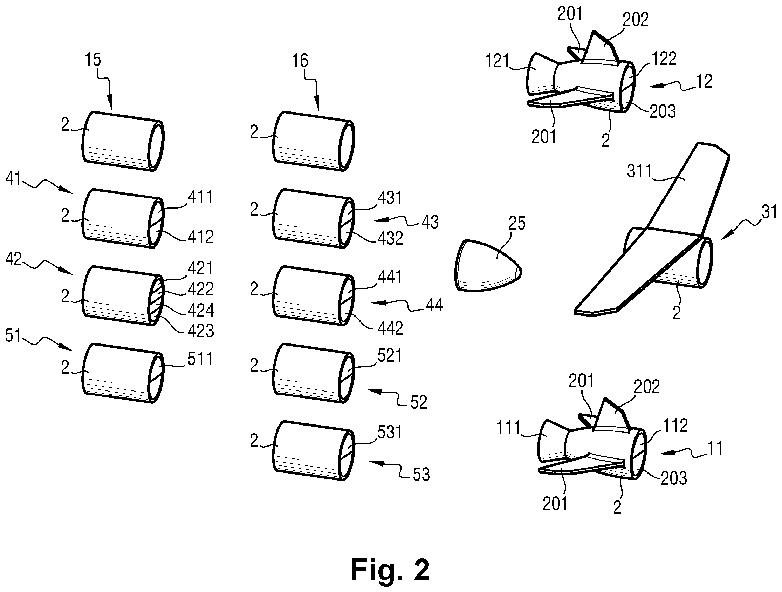

Le premier module de sustentation 31 (visible sur la figure 2) pourvue d'une voilure classique 311, fixe, solidaire de l'enveloppe 2 et dimensionnée pour assurer la sustentation de l'aéronef porteur autonome 1 quelle que soit sa version. Le deuxième module de sustentation 32 (visible sur la figure 3) est pourvu d'une voilure à géométrie variable 321 solidaire de l'enveloppe 2 et pourvue d'une motorisation 322 reliée à une unité électronique de commande 323 raccordable à l'unité électronique de pilotage 211 pour être pilotée par l'unité électronique de pilotage 211 en vue d'assurer la sustentation de l'aéronef porteur autonome 1 en fonction de sa version (masse, position du centre de gravité et du centre de poussée) et des conditions de vol (vitesse et altitude). A cet effet, l'unité électronique de pilotage 211 dispose d'une table mettant en relation des commandes de ladite motorisation avec les différentes versions et les paramètres de vol correspondant à différentes conditions de vol.

A titre d'exemple, les formes de la voilure et du fuselage, et la motorisation de l'aéronef seront choisies pour permettre une vitesse comprise entre 0,5 et 0,9 Mach, une altitude de 12000 mètres. Les dimensions intérieures du fuselage définies par la section transversale de l'enveloppe 2 sont déterminées pour autoriser l'emport d'une charge militaire de différents types. Le fuselage et la voilure seront aussi déterminées pour répondre à des contraintes prédéterminées de furtivité.

Les tronçons spécifiques comprennent :
- un premier module de détection 41,
- un deuxième module de détection 42,
- un troisième module de détection 43,
- un module de brouillage radar 44,
- un premier module d'armement 51,
- un deuxième module d'armement 52,
- un troisième module d'armement 53.

Le premier module de détection 41 comprend un radar airair 411 autorisant une surveillance aérienne de portée relativement grande, et une unité électronique de traitement des signaux radars 412 agencée pour être reliée à l'unité électronique de commande 211. Le premier module de détection 41 peut comprendre un ou plusieurs autres capteurs d'un environnement de l'aéronef porteur autonome 1, comme par exemple un capteur optique du domaine infrarouge et/ou un capteur optique du domaine visible. Le deuxième module de détection 42 comprend un radar air-sol 421, une unité électronique de traitement des signaux radars 422 agencée pour être reliée à l'unité électronique de commande 211, un dispositif de prise de vue du sol 423 et une unité électronique de traitement des signaux images 424 reliée au dispositif de prise de vue du sol 423 et agencée pour être reliée à l'unité électronique de commande 211. Le radar air-sol 421 est par exemple un radar à visée latérale ou un radar à synthèse d'ouverture. Le deuxième module de détection 42 peut comprendre en outre un illuminateur laser pour faire de la désignation de cible.

Le troisième module de détection 43 comprend un radar de surveillance frontale 431, comme un radar ayant une antenne réseau à commande de phase pour assurer également une fonction de suivi de terrain, et une unité électronique de traitement des signaux radars 432 agencée pour être reliée à l'unité électronique de commande 211.

Le module de brouillage radar 44 comprend un émetteur radar 441 agencé de manière connue en elle-même pour saturer une antenne radar au sol ou pour envoyer vers cette antenne de faux signaux d'écho et une unité de commande 442 de l'émetteur radar 441.

Le premier module d'armement 51 incorpore une première charge explosive 511. La première charge explosive 511 est une charge conventionnelle, ici une charge à effet de souffle d'une première puissance.

Le deuxième module d'armement 52 incorpore une deuxième charge explosive 521. La deuxième charge explosive 521 est une charge conventionnelle, ici une charge à fragmentation d'une deuxième puissance.

Le troisième module d'armement 53 incorpore une troisième charge explosive 531. La troisième charge explosive 531 est une charge pénétrante ayant une troisième puissance. Les aéronefs porteurs autonomes décrits ci-dessus ont un fuselage présentant un même maître-couple.

Ainsi, le module porteur autonome 1A est ici obtenu par l'assemblage des modules suivants :
- un troisième module de propulsion 13 ;
- un deuxième module de réserve de carburant 16 offrant la plus longue autonomie ;
- un premier module de sustentation 31 ;
- un module de commande 21 ;
- un premier module de détection 41 ;
- un module de nez 25.

Le module porteur autonome 1B est ici obtenu par l'assemblage des modules suivants :
- un premier module de propulsion 11 ;
- un premier module de réserve de carburant 15 offrant une autonomie moyenne ;
- un premier module de sustentation 31 ;
- un module de commande 21 ;
- un deuxième module de détection 42 ;
- un module de nez 25.

Le module porteur autonome 1C1 est ici obtenu par l'assemblage des modules suivants :
- un premier module de propulsion 11 ;
- un premier module de réserve de carburant 15 ;
- un premier module de sustentation 31 ;
- un module de commande 21 ;
- un troisième module de détection 43 ;
- un troisième module d'armement 53 ;
- un module de nez 25.

Le module porteur autonome 1C2 est ici obtenu par l'assemblage des modules suivants :
- un deuxième module de propulsion 12 ;
- un premier module de sustentation 31 ;
- un module de commande 21 ;
- un premier module d'armement 51 ;
- un module de nez 25.

Les organes de liaison des tronçons d'enveloppe 2 les uns aux autres comprennent des viroles de liaison mécanique des tronçons deux-à-deux et des connecteurs électriques et/ou optiques permettant la liaison des équipements à l'unité de commande 211. Ces organes de liaison sont connus en eux-mêmes.

Le groupe aérien peut comprendre des aéronefs porteurs autonomes modulaires, tels que ceux décrits précédemment, mais également des aéronefs porteurs autonomes non modulaires qui peuvent être de même taille ou, au contraire, plus petits ou plus grands que les aéronefs porteurs autonomes modulaires. De préférence, les aéronefs porteurs autonomes non modulaires sont homothétiques des aéronefs porteurs autonomes modulaires.

Bien entendu, l'invention n'est pas limitée au mode de réalisation décrit mais englobe toute variante entrant dans le champ de l'invention telle que définie par les revendications.

En particulier, les aéronefs réalisables conformément à l'invention peuvent avoir une structure différente de celle de l'invention.

Le choix de la voilure et de la forme du fuselage sera dicté de manière classique par les performances attendues de l'aéronef et notamment ses performances aérodynamiques (finesse, trainée, stabilité aérodynamique) et sa furtivité vis-à-vis des radars. D'autres paramètres peuvent entrer en ligne de compte comme :
- l'alimentation de la motorisation en air compte tenu de l'écoulement de l'air le long de la voilure et du fuselage et du positionnement de l'entrée d'air de la motorisation par rapport à la voilure et au fuselage ;
- la capacité d'emport sous voilure ou en soute ;
- le facteur de charge maximal...

La voilure de tout ou partie des modules de sustentation pourra avoir une autre forme que celle décrite et par exemple une forme rectangulaire, elliptique, trapézoïdale en flèche, en flèche inversée, delta, rhomboïdale... La voilure pourra être de type monoplan, biplan...

La voilure pourra être haute, médiane ou basse, suspendue, en aile de mouette...

La voilure pourra être à géométrie variable ou fixe. Dans le cas d'une géométrie variable, la loi de variation de la géométrie sera adaptée à la version de l'aéronef et du profil de vol.

Les modules de sustentation peuvent comprendre des voilures de surfaces et de formes différentes et/ou de types différents.

Tout ou partie du module de guidage et le module de sustentation peuvent être regroupés sur un seul et même tronçon, par exemple dans le cas d'une voilure delta.

L'enveloppe 2 formant un tronçon de fuselage pourra avoir une section transversale ayant une autre forme que celle décrite et par exemple une forme circulaire, elliptique ou ovale à grand axe vertical ou horizontal, carrée, rectangulaire à grand axe vertical ou horizontal, trapézoïdale, triangulaire...

L'aéronef porteur autonome comprend un nez et un tronçon de queue : ces deux tronçons peuvent comprendre ou pas des équipements faisant de ceux-ci des modules communs ou des modules spécialisés.

Il est possible de prévoir d'autres modules comme par exemple un module de navigation comprenant un dispositif de navigation par signaux d'opportunité (ou « navsop ») adapté à des missions dans des zones où les signaux de navigation par satellites (type GPS, GLONASS, Galileo, Beidou, ...) ne sont pas disponibles car absents, masqués ou brouillés.

La centrale inertielle peut comprendre des gyroscopes ou gyromètres de tout type comme des gyroscopes à résonateurs axisymétriques vibrants, des gyrolasers, des gyroscopes de type microsystème électromécanique (MEMS ou « electromechanical system »). La centrale inertielle peut comprendre des accéléromètres pendulaires ou oscillants, à poutre vibrante, de type MEMS ou autres.

Il pourrait être envisagé d'avoir un aéronef porteur autonome pourvu d'un module émetteur radar pour fonctionner en association avec un récepteur radar équipant soit un autre module porteur autonome soit l'aéronef maître de telle manière que ces derniers disposent d'une information radar tout en étant plus difficilement repérables que s'ils utilisaient un émetteur radar.

Les antennes et longueurs d'onde des émetteurs/récepteurs radar seront choisies en fonction des applications envisagées compte-tenu notamment de la portée, la finesse de détection, la résolution voulues.

Les modules d'armement peuvent comprendre plusieurs versions armées constituant chacune un missile et incorporant une charge militaire de différentes masses et/ou de différentes natures (conventionnelle ou non, effets de souffle, fragmentation, pénétration...) . Le module d'armement peut comprendre une charge de tout type comme une charge à fragmentation, une charge thermobarique, une charge électromagnétique, une charge au graphite... Le module d'armement peut être agencé pour larguer la charge ou pour la projeter (par exemple sous la forme d'un missile) ou pour constituer lui-même le vecteur destiné à s'écraser sur la cible...

Le module de propulsion peut comprendre une motorisation à hélice classique, un statoréacteur, une motorisation à hélice et un booster par exemple pour faciliter les opérations de décollage, un moteur fusée à carburant solide. Il est possible d'avoir plusieurs type de nez et/ou d'entrée d'air et/ou de voilure en fontion de la motorisation. De préférence, les modules sont agencés pour la fabrication d'aéronefs porteurs autonomes subsoniques. En variante, les modules permettent la fabrication d'aéronefs porteurs autonomes supersoniques. On pourrait également envisager d'avoir un ensemble de modules permettant la fabrication d'aéronefs porteurs autonomes selon une version subsonique et d'aéronefs porteurs autonomes selon une version supersonique, une partie des modules étant communs aux deux versions.

D'autres moyens de couplage des modules sont envisageables à partir du moment où ils permettent la solidarisation des modules entre eux et la transmission de signaux et/ou de puissance électriques pour les équipements qui en ont besoin.

La navigation peut être une navigation hybridée à partir de données satellitaires, inertielles et/ou optroniques.

Les modules communs peuvent comprendre un seul type de module de propulsion, et/ou un seul type de module de commande et/ou un seul type de module de sustentation et/ou un seul type de module de guidage. Il peut y avoir dans les modules communs plusieurs type de module de commande. Il est possible de prévoir d'autres modules que ceux décrits :
- module d'alimentation électrique ou de stockage d'énergie électrique (batteries, piles à combustible...) si certains des équipements des autres modules sont relativement gourmands en énergie ou doivent être alimentés selon des paramètres particulier (tension, intensité...) ;
- module d'atterrissage comportant par exemple un train d'atterrissage, rétractable ou fixe, ou un parachute si l'aéronef porteur autonome ne dispose pas de train d'atterrissage ;
- module de largage comportant des moyens d'accrochage à un aéronef porteur piloté si l'aéronef porteur autonome ne dispose pas de moyens de décollage autonome et doit être largué en vol ;
- module de contre-mesure incorporant un module de largage de leurres infrarouges ou de leurres radar ;
- module de navigation en essaim, comprenant une intelligence artificielle, lorsque les aéronefs porteurs autonomes sont destinés à voler en formation rapprochée.

## Revendications

1. Ensemble modulaire d'aéronefs autonomes (1), comprenant des modules communs et des modules spécifiques fixables les uns aux autres, les modules comportant chacun une enveloppe (2) formant un tronçon de fuselage,
. les modules communs comprenant :
-des modules de propulsion (11 à 14) pourvus d'une motorisation,
-des modules de guidage pourvus d'au moins une surface mobile de vol et d'un actionneur de déplacement de ladite surface mobile de vol,
-des modules de commande (21) incorporant une unité électronique de commande pourvue des moyens de son raccordement à la motorisation et à l'actionneur,
-des modules de sustentation (31, 32) pourvus d'une voilure pour assurer la sustentation de l'aéronef autonome,
. les modules spécifiques comprenant :
- des modules de détection (41 à 43) comprenant au moins un capteur d'un environnement de l'aéronef,
- des modules d'armement (51 à 53).

2. Ensemble selon la revendication 1, dans lequel les modules d'armement comprennent au moins :
-un premier module d'armement (51) incorporant une première charge explosive,
-un deuxième module d'armement (52) incorporant une deuxième charge explosive.

3. Ensemble selon la revendication 1 ou 2, dans lequel les modules de détection comprennent au moins :
-un premier module de détection (41) incorporant au moins un premier capteur,
un deuxième module de détection (42) incorporant au moins un deuxième capteur.

4. Ensemble selon l'une quelconque des revendications précédentes, dans lequel le module de guidage comprend un empennage (201, 202).

5. Ensemble selon l'une quelconque des revendications précédentes, dans lequel les fuselages des modules (11 à 14, 21, 31, 32, 41 à 43, 51 à 53) ont un même maître couple.

## Patentansprüche

1. Modulare Anordnung von autonomen Luftfahrzeugen (1), umfassend allgemeine Module und spezifische Module, die aneinander befestigt werden können, wobei die Module jeweils eine Hülle (2) umfassen, die einen Rumpfabschnitt bildet,
wobei die allgemeinen Module umfassen:
- Antriebsmodule (11 bis 14), die mit einer Motorisierung ausgestattet sind,
- Lenkmodule, die mit zumindest einer beweglichen Flugoberfläche und einem Aktuator zum Verstellen der beweglichen Flugoberfläche ausgestattet sind,
- Steuermodule (21) mit einer integrierten elektronischen Steuereinheit, die mit den Mitteln zu deren Verbindung mit der Motorisierung und dem Aktuator versehen ist,
- Auftriebsmodule (31, 32), die mit einem Tragwerk ausgestattet sind, um den Auftrieb des autonomen Luftfahrzeugs zu gewährleisten,
wobei die spezifischen Module umfassen:
- Detektionsmodule (41 bis 43) mit zumindest einem Umgebungssensor zur Erfassung einer Umgebung des Luftfahrzeugs,
- Bewaffnungsmodule (51 bis 53).

2. Anordnung nach Anspruch 1, wobei die Bewaffnungsmodule zumindest umfassen:
- ein erstes Bewaffnungsmodul (51) mit einer integrierten ersten Sprengladung,
- ein zweites Bewaffnungsmodul (52) mit einer integrierten zweiten Sprengladung.

3. Anordnung nach Anspruch 1 oder 2, wobei die Detektionsmodule zumindest umfassen:
- ein erstes Detektionsmodul (41) mit zumindest einem integrierten ersten Sensor,
- ein zweites Detektionsmodul (42) mit zumindest einem integrierten zweiten Sensor.

4. Anordnung nach einem der vorhergehenden Ansprüche, wobei das Lenkmodul ein Leitwerk (201, 202) umfasst.

5. Anordnung nach einem der vorhergehenden Ansprüche, wobei die Rumpfabschnitte der Module (11 bis 14, 21, 31, 32, 41 bis 43, 51 bis 53) ein und denselben Hauptspant besitzen.

## Claims

1. Modular assembly of autonomous aircraft (1), comprising common modules and specific modules that can be attached to one another, the modules each comprising a shell (2) that forms a fuselage portion, the common modules comprising:
- propulsion modules (11 to 14) provided with a drive,
- guide modules provided with at least one movable flight surface and with an actuator for moving said movable flight surface,
- control modules (21) that include an electronic control unit provided with means for connection thereof to the drive and to the actuator,
- lift modules (31, 32) provided with a wing system in order to provide lift to the autonomous aircraft, the specific modules comprising:
- detection modules (41 to 43) comprising at least one sensor for an environment of the aircraft,
- weapon modules (51 to 53).

2. Assembly according to claim 1, wherein the weapon modules comprise at least:
- a first weapon module (51) that includes a first explosive charge,
- a second weapon module (52) that includes a second explosive charge.

3. Assembly according to claim 1 or 2, wherein the detection modules comprise at least:
- a first detection module (41) that includes at least a first sensor,
- a second detection module (42) that includes at least a second sensor.

4. Assembly according to any of the preceding claims, wherein the guide module comprises an empennage (201, 202).

5. Assembly according to any of the preceding claims, wherein the fuselages of the modules (11 to 14, 21, 31, 32, 41 to 43, 51 to 53) have the same master crosssection.
